# EUROPÄISCHE PATENTSCHRIFT

(11) **EP 2 728 685 B1**
(45) Veröffentlichungstag und Bekanntmachung des Hinweises auf die Patenterteilung: **09.05.2018**
(21) Anmeldenummer: 13185128.9
(22) Anmeldetag: 19.09.2013
(51) Int. Cl.: H02B 1/56

(54) **Freiluftschaltschrank**
Outdoor control cabinet
Armoire de commande de plein air

(30) Priorität: 06.11.2012 AT 504922012
(43) Veröffentlichungstag der Anmeldung: 07.05.2014
(73) Patentinhaber: Mehler Elektrotechnik Gesellschaft m.b.H., 4493 Wolfern bei Steyr (AT)
(72) Erfinder: Mehler, Alexander, 4493 Wolfern bei Steyr (AT)
(74) Vertreter: Patentanwaltskanzlei Hübscher

(56) Entgegenhaltungen:
- DE-A1- 4 334 656
- US-A- 5 216 577

## Beschreibung

Die Erfindung bezieht sich auf einen Freiluftschaltschrank mit einem Gehäuse auf einem in das Erdreich ragenden Sockel und mit einer Einrichtung zum Klimatisieren des Gehäuses mit Hilfe einer Luftströmung, deren an wenigstens ein Gebläse angeschlossener Strömungsweg einen Wärmetauscher zwischen dem Erdreich und der Luft umfasst.

Um Freiluftschaltschränke vor extremen Temperaturbelastungen zu schützen, ist es bekannt, die Gehäuseluft mit Hilfe eines Gebläses im Kreislauf über einen Wärmetauscher zu führen, der eine im Erdreich verlegte Rohrschleife für die aus dem Gehäuse abgesaugte Gehäuseluft umfasst. In der kalten Jahreszeit kann somit das Gehäuseinnere mit Luft beaufschlagt werden, die durch Erdwärme erwärmt wurde, während die Gehäuseluft in der warmen Jahreszeit ihre Wärme zum Teil an das Erdreich abgeben kann. Nachteilig ist allerdings neben dem mit der Verlegung der Rohrschleife verbundenen Bauaufwand der Umstand, dass im Gehäuse des Freiluftschaltschranks zusätzlich Platz für das Gebläse zur Kreislaufförderung der Luft geschaffen werden muss. Außerdem besteht die Gefahr einer Verschmutzung des Gehäuses bei einem Leckwerden der Rohrschleife.

Ähnliche Nachteile treten bei einem Freiluftschaltschrank auf (US 5 216 577 A), der nicht nur eine Umluftführung über einen Wärmetauscher mit im Erdreich verlegten Rohrschleifen, sondern zusätzlich eine Belüftung mit Frischluft aufweist, wobei für die Umluft randseitige Gehäuseteile vorgesehen sind, die einen mit Frischluft beaufschlagbaren Kernraum umschließen und von diesem weitgehend abgegrenzt sind, sodass zwei voneinander im Wesentlichen unabhängige Luftströmungen durch das Gehäuse geführt werden.

Schließlich ist es zur Verbesserung der Kühlung von im Freien aufgestellten Elektroschränken bekannt (WO 2007/134695 A1), das Gehäuse mit einer Einhausung zu versehen, zwischen der und dem Gehäuse zwei voneinander getrennte Kühlkanäle gebildet werden, nämlich ein sich über die Gehäusedecke erstreckender Kühlkanal und ein Kühlkanal, der sich entlang der Umfangswände des Gehäuses erstreckt. Aufgrund der sich im Gehäuse ergebenden Konvektionsströmungen kann somit die gegen die Gehäusedecke aufsteigende Wärme durch einen gesonderten Kühlluftstrom abgeführt werden, der wie der Kühlluftstrom für die Kühlung der Umfangswände von außen angesaugt und nicht über einen Wärmetauscher geführt wird.

Der Erfindung liegt somit die Aufgabe zugrunde, einen Freiluftschaltschrank der eingangs geschilderten Art so auszubilden, dass mit einfachen Konstruktionsbedingungen eine Klimatisierung des Gehäuses erreicht werden kann, ohne einen zusätzlichen Gehäuseplatz für ein Gebläse schaffen oder eine Verschmutzungsgefahr in Kauf nehmen zu müssen.

Die Erfindung löst die gestellte Aufgabe dadurch, dass eine das Gehäuse und den Sockel unter Ausbildung des Strömungswegs für eine Luftströmung umschließende Einhausung als Wärmetauscher vorgesehen ist, der auf der Außenseite des Mantels der Einhausung angeordnete, im bodenseitigen Bereich des Mantels mit dem Strömungsweg in Strömungsverbindung stehende Zuluftkanäle aufweist.

Durch diese Maßnahmen wird zunächst erreicht, dass für den Wärmetauscher keine zusätzlichen Erdarbeiten erforderlich werden und das Gehäuse durch die für seine Klimatisierung vorgesehenen Maßnahmen unverändert bleibt. Da außerdem keine Luftströmung durch das Gehäuse geführt wird, kann eine sonst mit einer solchen Luftführung verbundene Verschmutzung des Gehäuses ausgeschlossen werden. Trotzdem wird die angestrebte Klimatisierung des Gehäuses sichergestellt, weil sich einerseits durch die Einhausung eine Abschirmung des Gehäuses gegenüber der jeweiligen Außentemperatur ergibt und anderseits die im Wärmeaustausch mit der Erdwärme durch die Einhausung geführte, erwärmte oder gekühlte Außenluft für eine entsprechende Temperaturbeaufschlagung des Gehäuses sorgt. Im Bereich des vom Erdreich abgedeckten Abschnitts der Einhausung nimmt ja die über die Zuluftkanäle angesaugt Außenluft Wärme aus dem Erdreich auf oder gibt Wärme an das Erdreich ab, um mit der entlang der Strömungswege zwischen Gehäuse und Einhausung strömenden Luft das Gehäuse entweder zu wärmen oder zu kühlen. Um Wärmeverluste über die Einhausung zu vermeiden, kann dabei der Mantel der Einhausung oberhalb des Erdreichs mit einer Wärmedämmung versehen sein.

Eine das Gehäuse des Freiluftschaltschranks von allen Seiten umschließende Einhausung erschwert den Zugang zum Gehäuse, das üblicherweise auf einer Gehäuseseite eine sich über die gesamte Gehäusewand erstreckende, ein- oder zweiflügelige Tür aufweist. Um von einer entsprechenden Türanordnung in der Einhausung absehen zu können, kann der Mantel der Einhausung das Gehäuse unter Freilassung der Türwand nur auf drei Seiten umschließen. Die damit verbundene Beeinträchtigung der Gehäuseklimatisierung kann im Hinblick auf die dadurch bedingte Konstruktionsvereinfachung in vielen Fällen in Kauf genommen werden, insbesondere wenn die Türwand mit einer Wärmedämmung versehen wird.

Um das Innere der Einhausung weitgehend vor Umwelteinflüssen schützen zu können, sollte der Luftaustritt der durch die Einhausung strömenden Luft nicht nach oben erfolgen. Aus diesem Grund kann die Einhausung im Deckenbereich eine mit wenigstens einer Durchtrittsöffnung für die Luftströmung versehene Zwischendecke aufweisen, oberhalb der der Mantel der Einhausung mit Luftaustrittsöffnungen versehen ist, sodass die aus der Durchtrittsöffnung in der Zwischendecke austretende Luftströmung an der Decke der Einhausung umgelenkt wird und zwischen der Decke und der Zwischendecke zu dem mit den Luftaustrittsöffnungen versehenen Mantel der Einhausung strömt. Werden die Luftaustrittsöffnungen für die Luftströmung im Mantel der Einhausung durch einen abgewinkelten Randsteg der Decke der Einhausung mit Abstand von der jeweiligen Wand des Mantels übergriffen, so kann für diese Luftaustrittsöffnungen ein weitgehender Spritzwasserschutz erreicht werden.

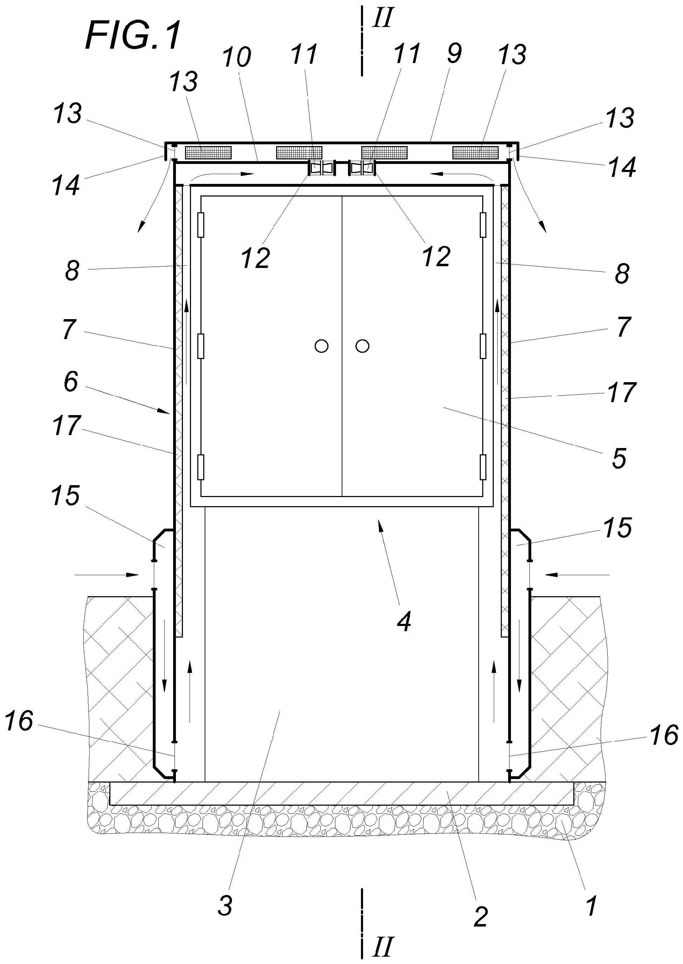

In der Zeichnung ist der Erfindungsgegenstand beispielsweise dargestellt. Es zeigen
Fig. 1 einen erfindungsgemäßen Freiluftschaltschrank in einem schematischen Schnitt durch die Einhausung parallel zur Türwand des Gehäuses und

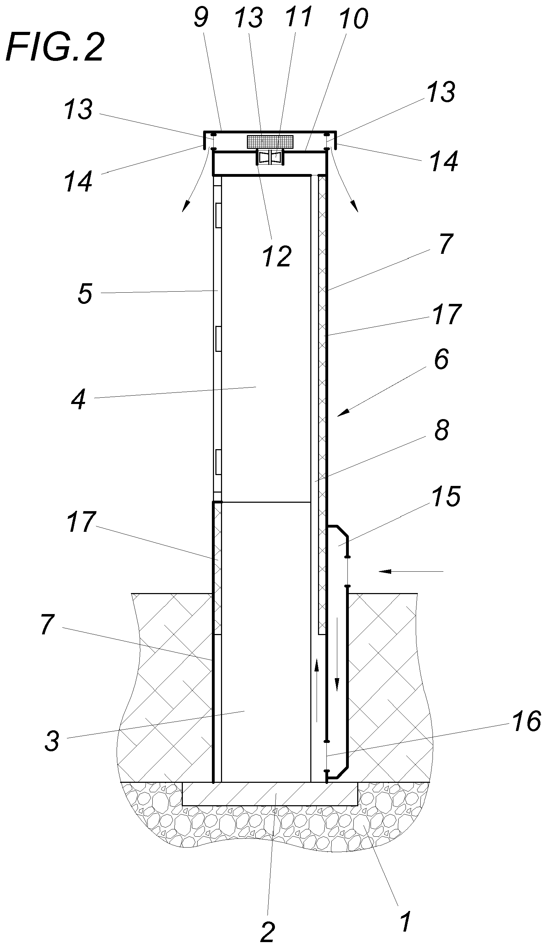

Fig. 2 einen Schnitt nach der Linie II-II der Fig. 1.

Der dargestellte Freiluftschaltschrank ruht in herkömmlicher Weise auf einer im Erdreich 1 auf einem Schotterbett verlegten Grundplatte 2 auf und bildet einen auf der Grundplatte 2 abgestützten Sockel 3, auf dem das Gehäuse 4 des Freiluftschaltschranks in üblicher Art aufgesetzt ist. Die vordere Türwand 5 dieses Gehäuses 4 ist gemäß dem dargestellten Ausführungsbeispiel mit einer zweiflügeligen Tür ausgerüstet, was jedoch nicht zwingend ist.

Zum Unterschied zu herkömmlichen Freiluftschaltschränken dieser Art sind der Sockel 3 und das Gehäuse 4 von einer gemeinsamen Einhausung 6 umschlossen, die zwischen ihrem Mantel 7 und dem Sockel 3 sowie dem Gehäuse 4 einen als Strömungsweg 8 für eine Luftströmung nutzbaren Freiraum offen lässt. Der Zwischenraum zwischen der Decke 9 der Einhausung 6 und dem Gehäuse 4 ist durch eine Zwischendecke 10 unterteilt, die die entlang des Strömungswegs 8 aufsteigende Luftströmung zu Gebläsen 11 umlenkt, um die angesaugte Luftströmung, die mit Hilfe der in Durchtrittsöffnungen 12 in der Zwischendecke 10 angeordneten Gebläse 11 in den Zwischenraum zwischen der Zwischendecke 10 und der Decke 9 geblasen wird, entlang der Decke 9 zu mit Schutzgittern versehenen Luftaustrittsöffnungen 13 zu fördern. Die Luftaustrittsöffnungen 13 werden dabei vorzugsweise durch abgewinkelte Randstege 14 der Decke 9 mit Abstand übergriffen, um einen zusätzlichen Schutz der Einhausung 6 vor Witterungseinflüssen zu erreichen.

Die Wände des Mantels 7 der Einhausung 6 sind auf ihrer Außenseite mit Zuluftkanälen 15 versehen, die im Bodenbereich der Einhausung 6 über Durchtrittsöffnungen 16 mit dem Innenraum der Einhausung 6 in Strömungsverbindung stehen, sodass mit Hilfe der Gebläse 11 über die Zuluftkanäle 15 Außenluft angesaugt werden kann, die im Bereich der Hinterfüllung der Einhausung 6 einen Wärmeaustausch mit dem Erdreich 1 erfährt, sodass der Mantel 7 der Einhausung 6 sowie die Zuluftkanäle 15 einen Wärmetauscher zwischen dem Erdreich 1 und der angesaugten Außenluft bilden.

In der kalten Jahreszeit wird die angesaugte, kalte Außenluft über das Erdreich 1 erwärmt und gibt ihre aufgenommene Wärme entlang des Strömungswegs 8 an das Gehäuse 4 ab, bevor die Luftströmung über die Luftaustrittsöffnungen 13 wieder aus der Einhausung 6 austritt. In der warmen Jahreszeit kann aufgrund der Temperaturdifferenz die angesaugte Außenluft einen Teil ihrer Wärme an das Erdreich 1 abgegeben, sodass die Luftströmung entlang des Strömungswegs 8 eine Gehäusekühlung bewirkt. Der Grad des Wärmeaustausches kann über die Förderleistung der Gebläse 11 an die jeweiligen Anforderungen angepasst werden.

Um einen Wärmeaustausch über den Mantel 7 der Einhausung 6 oberhalb des Erdreichs 1 zu unterbinden, empfiehlt es sich, den Mantel 7 in diesem Bereich mit einer Wärmedämmung 17 auszustatten.

Obwohl es durchaus möglich ist, eine über die Türwand 5 des Gehäuses 4 durchgehende Einhausung 6 vorzusehen, wird durch eine solche Einhausung 6 der Zugang zur Türwand 5 des Gehäuses 4 erschwert, weil zu diesem Zweck die Einhausung 6 selbst mit einer Tür ausgerüstet werden muss. Um diesen Mehraufwand zu vermeiden, kann die Einhausung 6 das Gehäuse 4 unter einer Freilassung der Türwand 5 des Gehäuses 4 nur auf drei Seiten umschließen, wie dies im Ausführungsbeispiel dargestellt ist. Da in einem solchen Fall eine Erwärmung oder Kühlung der Türwand 5 über eine im Wärmeaustausch mit dem Erdreich 1 stehende Luftströmung entfällt, ergeben sich hinsichtlich der Klimatisierung des Gehäuses 5 gewisse Einschränkungen, die jedoch im Allgemeinen nicht ins Gewicht fallen, insbesondere dann nicht, wenn die Türwand 5 eine Wärmedämmung aufweist.

## Patentansprüche

1. Freiluftschaltschrank mit einem Gehäuse (4) auf einem in das Erdreich (1) ragenden Sockel (3) und mit einer Einrichtung zum Klimatisieren des Gehäuses (4) mit Hilfe einer Luftströmung, deren an wenigstens ein Gebläse (11) angeschlossener Strömungsweg (8) einen Wärmetauscher zwischen dem Erdreich (1) und der Luft umfasst, **dadurch gekennzeichnet, dass** eine das Gehäuse (4) und den Sockel (3) unter Ausbildung des Strömungswegs (8) für eine Luftströmung umschließende Einhausung (6) als Wärmetauscher vorgesehen ist, der auf der Außenseite des Mantels (7) der Einhausung (6) angeordnete, im bodenseitigen Bereich des Mantels (7) mit dem Strömungsweg (8) in Strömungsverbindung stehende Zuluftkanäle (15) aufweist.

2. Freiluftschaltschrank nach Anspruch 1, **dadurch gekennzeichnet, dass** der Mantel (7) der Einhausung (6) oberhalb des Erdreichs (1) eine Wärmedämmung (17) aufweist.

3. Freiluftschaltschrank nach Anspruch 1 oder 2, **dadurch gekennzeichnet, dass** der Mantel (7) der Einhausung (6) das Gehäuse (4) unter Freilassung der Türwand (5) auf drei Seiten umschließt.

4. Freiluftschaltschrank nach Anspruch 3, **dadurch gekennzeichnet, dass** die Türwand (5) des Gehäuses (4) bzw. die Türen der Türwand (5) eine Wärmedämmung aufweisen.

5. Freiluftschaltschrank nach einem der Ansprüche 1 bis 4, **dadurch gekennzeichnet, dass** die Einhausung (6) im Deckenbereich eine mit wenigstens einer Durchtrittsöffnung (12) für die Luftströmung versehene Zwischendecke (10) aufweist, oberhalb der der Mantel (7) der Einhausung (6) mit Luftaustrittsöffnungen (13) versehen ist.

6. Freiluftschaltschrank nach Anspruch 5, **dadurch gekennzeichnet, dass** die Luftaustrittsöffnungen (13) für die Luftströmung im Mantel (7) der Einhausung (6) durch einen abgewinkelten Randsteg (14) der Decke (9) der Einhausung (6) mit Abstand übergriffen sind.

## Claims

1. Outdoor control cabinet having a housing (4) on a base (3) protruding into the ground (1) and having a device for air-conditioning the housing (4) using an air flow, the flow path (8) of which, attached to at least one fan (11), includes a heat-exchanger between the ground (1) and the air, **characterised in that** an enclosure (6) enclosing the housing (4) and the base (3), thus forming the flow path (8) for an air flow, is provided as the heat-exchanger which comprises intake air channels (15) disposed on the outside of the casing (7) of the enclosure (6) and in flow-connection with the flow path (8) in the floor-end region of the casing (7).

2. Outdoor control cabinet as claimed in claim 1, **characterised in that** the casing (7) of the enclosure (6) comprises heat insulation (17) above the ground (1).

3. Outdoor control cabinet as claimed in claim 1 or 2, **characterised in that** the casing (7) of the enclosure (6) encloses the housing (4) on three sides while leaving the door wall (5) free.

4. Outdoor control cabinet as claimed in claim 3, **characterised in that** the door wall (5) of the housing (4) or the doors of the door wall (5) comprise heat insulation.

5. Outdoor control cabinet as claimed in any one of claims 1 to 4, **characterised in that** the enclosure (6), in the top region, comprises an intermediate cover (10) provided with at least one through-opening (12) for the air flow, above which intermediate cover the casing (7) of the enclosure (6) is provided with air outlet openings (13).

6. Outdoor control cabinet as claimed in claim 5, **characterised in that** the air outlet openings (13) for the air flow in the casing (7) of the enclosure (6) have a bent edge web (14) of the cover (9) of the enclosure (6) extending over them at a distance.

## Revendications

1. Armoire électrique à air libre avec un boîtier (4) sur un socle (3) s'élevant de la terre (1) et avec un dispositif destiné à la climatisation du boîtier (4) à l'aide d'un flux d'air, dont la voie d'écoulement (8) raccordée à au moins un ventilateur (11) comporte un échangeur thermique entre la terre (1) et l'air, **caractérisée en ce qu'**un encoffrage (6) environnant le boîtier (4) et le socle (3) sous la formation de la voie d'écoulement (8) pour un flux d'air est prévu comme échangeur thermique, qui comporte des canaux d'air entrant (15) présents en liaison d'écoulement avec la voie d'écoulement (8), dans la zone côté sol de l'enveloppe (7), disposés sur le côté extérieur de l'enveloppe (7) de l'encoffrage (6).

2. Armoire électrique à air libre selon la revendication 1, **caractérisée en ce que** l'enveloppe (7) de l'encoffrage (6) comporte, au-dessus de la terre (1), une isolation thermique (17).

3. Armoire électrique à air libre selon la revendication 1 ou 2, **caractérisée en ce que** l'enveloppe (7) de l'encoffrage (6) enferme le boîtier (4) en laissant libre la paroi de porte (5) sur trois côtés.

4. Armoire électrique à air libre selon la revendication 3, **caractérisée en ce que** la paroi de porte (5) du boitier (4) ou les portes de la paroi de porte (5) comporte(nt) une isolation thermique.

5. Armoire électrique à air libre selon l'une des revendications 1 à 4, **caractérisée en ce que** l'encoffrage (6) comporte dans la zone de plafond, un plafond intermédiaire (10) muni au moins d'une ouverture de passage (12) pour le flux d'air, au-dessus duquel l'enveloppe (7) de l'encoffrage (6) est munie d'ouvertures de sortie d'air (13).

6. Armoire électrique à air libre selon la revendication 5, **caractérisée** en ce les ouvertures de sortie d'air (13) pour le flux d'air dans l'enveloppe (7) de l'encoffrage (6) sont en prise avec espacement à travers une barre de bord (14) coudée du plafond (9) de l'encoffrage (6).
